# EUROPEAN PATENT APPLICATION

(11) **EP 2 437 459 A1**
(43) Date of publication of application: **04.04.2012**
(21) Application number: 10306078.6
(22) Date of filing: 01.10.2010
(51) Int. Cl.: H04L 29/06

(54) **Communication agent for managing IMS network communication, a method for same, and a user equipment adapted for same**

(71) Applicant: Alcatel Lucent, 75007 Paris (FR)
(72) Inventor: OUTTAGARTS, Abdelkader, 91620, NOZAY (FR); ROYER, Julien, 91620, NOZAY (FR)
(74) Representative: Nicolle, Olivier

(57) **Abstract**

Communication agent (50) adapted for communicating with both a user equipment and an IP multimedia Subsystem (IMS) network, said communication agent being adapted to receive from a user equipment its identity information for communicating with said IMS network (8), said agent further being adapted to verify connection of the user equipment with the IMS network,
said agent further being adapted for performed predetermined tasks on behalf of said user equipment if said user equipment is found to not be connected upon verification of its connection with the IMS network

## Description

The present invention concerns communication systems for IP Multimedia System networks, methods for managing a user equipment connection on IMS networks, and user equipment for use on IMS networks.

### BACKGROUND

This section introduces aspects that may be helpful in facilitating a better understanding of the invention. Accordingly, the statements of this section are to be read in this light and are not to be understood as admissions about what is in the prior art or what is not in the prior art.

Third generation (3G) communication systems have been developed to enable and expand communication services for mobile users. One such communication service is specified by the 3rd Generation Partnership Project (3GPP), in what is known as IP Multimedia Subsystem (IMS) architecture. The IMS architecture enables multimedia services over Internet Protocol (IP), and in particular enables voice calls through a core session signaling protocol for IMS networks known as Session Initiation Protocol (SIP).

An IMS network may comprise one or more control servers, known as CSCFs (call session control functions) to manage user call function such as session control, feature control, and resource allocation. There are typically three types of CSCF's present in an IMS network: Proxy CSCF (P-CSCF), Interrogating CSCF (I-CSCF), and Serving CSCF (S-CSCF). The IMS architecture is well known, and will not be further detailed for now.

When a user with his mobile phone terminal wishes to use the services offered by the IMS network, for example Session Initiated Protocol (SIP) or otherwise, the terminal first authenticates itself over the IMS network by sending identification information (in particular, BINDING information as detailed in standard RFC3261, comprising a public SIP address and local IP address) to the CSCF server, and in return, obtaining a receipt acknowledgement enabling the terminal to communicate with and be contacted over the access network used to connect to the IMS network.

Register information stored in the IMS network has a predetermined parameter, an "expire" parameter of the Contact Header , limiting its existence.

Under normal circumstances, the terminal will need to confirm its presence periodically to the CSCF, at a periodicity equal to the length of time of the "expire" parameter. When the terminal logs off the IMS network cleanly, it sends de-registration information (de-REGISTER and un-PUBLISH commands) to the S-CSCF, permitting the IMS netwok to remove the identity and contact information of the terminal from the IMS network.

However, when a terminal is forcibly disconnected from the IMS network, normally from lost network coverage in the access network (be it FEMTO, Wifi, Bluetooth, 3G or otherwise), for example in the countryside where there is sparse coverage, or when entering a tunnel, the terminal will reauthenticate itself upon finding an access network with coverage. The IMS Network, however, is unaware of the non further existence of the original terminal since no de-registration was performed.

Irrespective of whether the terminal reenters the same coverage zone (same access network) or a different coverage zone (different access network), the terminal will reauthenticate itself and receive a new identity reference, including a new IP address.

A known problem to this forced registration process is that the CSCF maintains wrong and obsolete information in the remaining time before the "expire" parameter. Thus other users on the IMS network wishing to contact the terminal may also be in possession of obsolete contact information if these were obtained with the original terminal identity binding.

This phenomenon poses a number of problems:
- other users are unable to determine whether the terminal remains connected;
- if a communication is attempted between a user and a terminal which has left the coverage, the SIP protocol will attempt to communicate with a non-existing terminal. Depending on how this is interpreted , the calling user may receive error message ranging from "user not found", "technical problem", to "insufficient credit to realize call", depending on the interpretation given by the Core IMS network.

A known solution in the art is to shorten the "expire" parameter, to force the CSCF servers to renew more often their information of connected terminals. This, however, is disadvantageous as more frequent renewal take up valuable bandwidth in the IMS network, thus increasing network management overheads.

An alternative is sought to better deal with this situation.

### BRIEF SUMMARY

An embodiment is therefoer a communication agent adapted for communicating with both a user equipment and an IP multimedia Subsystem (IMS) network, said communication agent being adapted to receive from a user equipment its identity information for communicating with said IMS network, said agent further being adapted to verify connection of the user equipment with the IMS network,
said agent further being adapted for performing predetermined tasks on behalf of said user equipment if said user equipment is found to not be connected upon verification of its connection with the IMS network.

Another embodiment is a method of managing a user equipment connection in an IMS network, comprising the steps of:
- acquiring the identity information of a user equipment authenticated onto an IMS network,
- determining if said user equipment remains connected with said IMS network;
- performing predetermined tasks on said IMS network on behalf of said user equipment when said it is determined that user equipment is no longer connected to said IMS network.

Yet a further embodiment is a user equipment adapted for use on IMS networks, adapted to:
- authenticate itself with an IMS network, thus acquiring a unique user identity on said IMS network;
- communicate said user identity to a communication agent located on an access network or on said IMS network;
- communicate at least one predetermined tasks to said communication agent to perform upon unplanned disconnection of said user equipment to said IMS network.

An advantage of these embodiments is to remove all obsolete information present in the IMS core network when these are found, without having recourse to bandwidth-sapping solutions such as reducing the expire parameters of each connection. Calling parties further have more accurate information on the reason for call failure.

### BRIEF DESCRIPTION

Some embodiments of devices and methods in accordance with embodiments of the present invention are now described, by way of example only, and with reference to the accompanying drawings, in which:

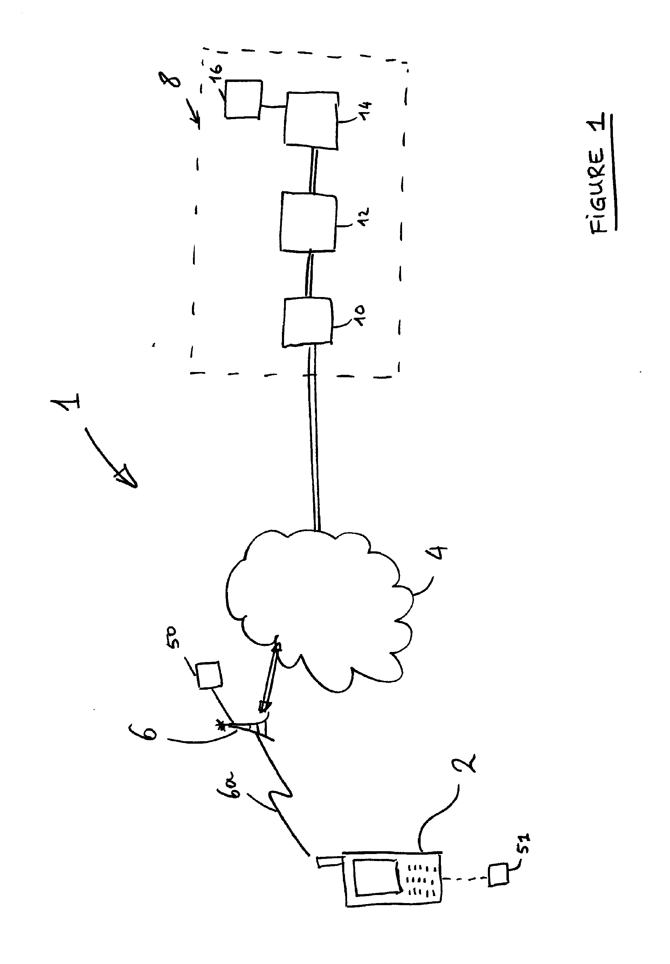

Figure 1 illustrates contextually a communication network according to an embodiment of the present invention.

### DETAILED DESCRIPTION

Figure 1 illustrates a communication network 1 according to a first exemplary embodiment, comprising an IMS-compatible mobile terminal 2 (also known as "User Equipment" (UE) in the related literature, which will be adhered to in the present description), for example carried by a customer, and adapted to communicate with a packet-based access network 4, for example Internet Protocol (IP) packets, via a radio link 6a between the user equipment 2 and an access point 6 of the access network 4.

The access point 6 typically represents an antenna enabling radio communication access to the access network 4, and may for example represent a Wifi antenna, femto cell, Base Station, or otherwise, depending on the technology of the access network 4.

The access network 4 is itself connected to a core I MS network 8, in which the principal functional components are the following:
- Proxy CSCF (P-CSCF) 10, is typically an entry point in the signaling plane between the user equipment 2 and the IMS network 8. The P-CSCF further acts as a SIP proxy and performs Quality of Service (QoS) if necessary, meaning that all requests initiated by or destined for the user equipment 2 traverse the P-CSCF;
- Interrogating CSCF (I-CSCF) 12, is an entry point in the IMS network 8 for other IMS networks during cross-network activity. The I-CSCF 12 also has the task of assigning a S-CSCF 14 when a User Equipement 2 first registers on the IMS network;
- Serving CSCF (S-CSCF) 14 is a central server assigned the control of the IMS session. The S-CSCF 14 also performs the Registration functions and manages the User Equipment 2 authentication process.

The CSCF's also call upon specific application servers to process SIP communication functionality (not shown).

Home IMS network 8 further includes any other network elements that are not shown for the sake of brevity, such as Multimedia Resource Function Controller (MRFC), a Breakout Gateway Control Function (BGCF), or a Media Gateway Controller Function (MGCF). In particular, within home IMS network 8, the P-CSCF 10 and the S-CSCF 14 comprises any systems, services or function operable to establish, maintain, or tear down a session in home IMS network 8.

The IMS network architecture is defined in standard 3GPP 23.228, incorporated herein in full by reference. The main signaling protocol used in IMS for the purpose of the present embodiment is the Session Initiation Protocol (SIP), as defined the standard RFC3261, which is also incorporated herein in full by reference.

The access network 4 may take the form of a variety of architectures. For instance, an IMS access network 4 may comprises a cellular network, such as CDMA network, or a GSM network. An IMS access network may also comprise a wireless LAN, such as a WiFi network or WiMAX network, and Digital Subscriber Line (DSL) network, Femto cells, or again Bluetooth protocols.

The user equipment 2 is disposed to connect to IMS network 8 via the access point 6 of the access network 4. The user equipment 2 is IMS-compatible and is thus capable of registering with IMS network 8 when given access to the home IMS network, which is triggered upon connection to the access network 4.

A communication agent 50 is associated with the access point 6 in the access network 4. The communication agent 50 may for example be installed in the middleware area of the access point 6. The middleware area of the access point 6 supplies the physical resources enabling the execution of the communication agent 50.

In particular, the communication agent 50 has sufficient rights attributed in the middleware of the access point 6 to monitor ingoing and outgoing communication exchange, and specifically, the communication agent 50 is able to intercept incoming IMS communication signals to the user equipment 2 being monitored by the communication agent 50.

The communication agent 50 is adapted to assume a specific and determined identity, corresponding to the BINDING information of each of the user equipment(s) 2 associated with the access point 6 through which each of the user equipments 2 have access to the IMS network 8.

The user equipment 2 is adapted to send to the communication agent 50 identity information permitting the communication agent 50 to assume the identity of the user equipment in question for communications with the IMS network 8, and act on its behalf. The identity information will most often correspond to BINDING information the user equipment 2 has acquired upon registration and authentication with the home IMS network 8. This communication exchange between itself and the user equipment 2 may be encrypted if desired.

The BINDING information is detailed in standard RFC3261, and comprises the public SIP address, and the local (NAT address) IP address of the access network 4.

The user equipment 2 is also adapted to send determined tasks to be effected by the communication agent 50 in the case the user equipment 2 were to be ungraciously disconnected from the access network 4 before being able to deregister itself.

For example, the predetermined tasks may for example comprise at least one of the following actions:
- sending user disconnection information to a callee party,
- sending unpublish command to the IMS network, and/or
- sending deregister command to IMS network.

The BINDING information as well as the tasks to perform when ungraciously disconnected may be sent to the communication agent 50 for example in a XML file format.

To facilitate the communication between the communication agent 50 and the user equipment 2, a helper application 51 may be installed on the user equipment 2 in its applications environment.

The communications agent 50 is therefore adapted to act on behalf of the user equipment 2 for all predetermined network management issues, and to execute a number of tasks under conditions of disconnection by the user equipment 2 from the IMS network.

The functioning of the above-described embodiment will be expounded herebelow.

When a user equipment 2 is first switched on within the home IMS network 8, or moves within coverage of the access network connected to the IMS network 8, the mobile terminal 2 first registers his user ID or address with the network before allowing the terminal to fully connect. This is performed by sending a SIP 'REGISTER' message from the mobile terminal 2 to the IMS, which comprises a public SIP address, and the local (NAT address) IP address of the access network 4. The IMS receives and processes this information using a serving call state control function (S-CSCF) 14, acting as the REGISTRAR server.

The IMS acknowledges the registration by sending a suitable acknowledge message (e.g. 200 ACK message) in accordance with protocol convention. Subsequent registrations also take place (re-'REGISTER') whenever the preceding registration has expired, for example at the end of each "expire" parameter of the Contact Header, or when there is a change in the status of the user. When a user wishes to set up a session with another user, such as a voice call or sending of a text message, the session negotiation may also be performed under SIP.

When the user equipment 2 wishes to set up a communication with a third party, the user equipment can perform this with no changes to prior art exchanges: the user equipment 2 sends an INVITE requests to the third party, and if the third party equipment accepts the communication, the call proceeds between the two parties. In this case the communication agent 50 has no interaction in the establishment of the communication.

When a third party, "the callee", wishes to communicate with the user equipment 2, the callee sends an INVITE request to the user equipment 2. Detecting the incoming communication request, the communication agent 50 intercepts the INVITE request. At this point the communication agent 50 performs the following steps:
1) forward the INVITE request to the user equipment 2, and monitor the user equipment's response;
2) If the user equipment 2 responds to the INVITE request by accepting or denying the communication (such as with 100-OK, 180-RINGING or similar acknowledgement messages), the communication agent 50 is able to confirm the connection of the user equipment 2 with the IMS network, and its responsiveness, and thereafter becomes transparent to the ensuing communication exchange between the two parties of the communication;
3) If the user equipment 2 does not respond to the INVITE request, this indicates that the user equipment 2 is not connected to the access network any longer.

It is therefore likely that user equipment 2 is no longer connected to the access network 4. In this case, the communication agent 50 sends the caller a message "callee offline" or similar.

In the case that the communication agent 50 determines the user equipment 2 to be offline, the communication agent 50 will perform the previously sent task's list from the user equipment 2, by for example communicating the reason for the failure of the communication to the callee, and then sending deregistration requests to the S-CSCF of the Home Network 8.

PRESENCE and REGISTRAR servers therefore contain more up-to-date information on the real presence of its users, without having to multiply presence verification to all users by pinging users across the IMS network, thus saving communication bandwidth.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. Communication agent (50) adapted for communicating with both a user equipment and an IP multimedia Subsystem (IMS) network, said communication agent being adapted to receive from a user equipment its identity information for communicating with said IMS network (8), said agent further being adapted to verify connection (6a) of the user equipment with the IMS network,
said agent further being adapted for performing predetermined tasks on behalf of said user equipment if said user equipment is found to not be connected upon verification of its connection with the IMS network.

2. Communication agent (50) according to claim 1, said agent comprising:
- means for receiving identity information from an authenticated user equipment on said IMS network,
- means for detecting and for intercepting communication attempts from an IMS network to said user equipment, said agent further comprising means to forward said call attempts to said user equipment upon interception of said communication attempt,
- means for verifying the status of the connection between said user equipment and said IMS network, and
- means for communicating with said IMS network on behalf of and with the identity of said user equipment.

3. Communication agent according to claim 1 or 2, wherein the predetermined tasks to be performed by said agent comprises at least one of the following tasks: sending de-register command, unpublish command to IMS network.

4. Communication agent according to any one of the preceding claims, wherein the user equipment identity information comprises the BINDING parameter.

5. Communication agent according to any one of the preceding claims, being operated at an access point of an access network to an IMS network, said access point being for example a WiFi router, femto cell, GSM Base Station.

6. Method of managing a user equipment (2) connection in an IMS network (8), comprising the steps of:
- acquiring the identity information of a user equipment authenticated onto an IMS network,
- determining if said user equipment (2) remains connected with said IMS network (8);
- performing predetermined tasks on said IMS network on behalf of said user equipment when said it is determined that user equipment is no longer connected to said IMS network.

7. User equipment adapted for use on IMS networks, adapted to:
- authenticate itself with an IMS network, thus acquiring a unique user identity on said IMS network;
- communicate said user identity to a communication agent (50) located on an access network or on said IMS network;
- communicate at least one predetermined tasks to said communication agent (50) to perform upon unplanned disconnection of said user equipment to said IMS network.
